# EUROPÄISCHE PATENTSCHRIFT

(11) **EP 4 070 681 B1**
(45) Veröffentlichungstag und Bekanntmachung des Hinweises auf die Patenterteilung: **07.06.2023**
(21) Anmeldenummer: 21166911.4
(22) Anmeldetag: 06.04.2021
(51) Int. Cl.: A43B 7/14, A43B 17/00, A43B 17/14, B29D 35/14

(54) **ORTHOPÄDISCHER SCHUHEINLEGESOHLENROHLING**
ORTHOPAEDIC SHOE INSERT SOLE BLANK
ÉBAUCHE DE SEMELLE À INSÉRER DANS LA CHAUSSURE ORTHOPÉDIQUE

(43) Veröffentlichungstag der Anmeldung: 12.10.2022
(73) Patentinhaber: Spannrit GmbH, 63801 Kleinostheim (DE)
(72) Erfinder: KATZER, Roland, 63801 Kleinostheim (DE)
(74) Vertreter: Kuhnen & Wacker Patent- und Rechtsanwaltsbüro PartG mbB

(56) Entgegenhaltungen:
- WO-A1-2016/191498
- DE-A1-102018 206 906
- US-A1- 2004 181 971
- US-A1- 2017 027 277

## Beschreibung

Die Erfindung betrifft orthopädische Schuheinlegesohlenrohlinge mit einem oberseitigen, d.h. einem fußseitigen, drei-dimensional ausgebildeten anatomischen Fußbett, mit dem der Fuß eines Trägers der erfindungsgemäßen Schuheinlegesohle gestützt werden kann. Weiter erfindungsgemäß betrifft die Erfindung orthopädische Schuheinlegesohlenrohlinge, die zur weiteren Stützung des Fußes eines Trägers der orthopädischen Schuheinlage ein Stützteil aufweisen, das gegebenenfalls zur Korrektur von Fußfehlstellungen verwendet werden kann. Des weiteren betrifft die Erfindung Schuheinlegesohlenrohlinge, die durch Orthopädietechniker oder Orthopädieschuhmacher individuell an den Fuß eines Trägers einer orthopädischer Schuheinlage angepasst werden können.

Im Stand der Technik sind gattungsgemäße, orthopädische Schuheinlagen bereits bekannt, die jedoch oftmals in ihrer Herstellung aufwendig sind, da meistens das orthopädische Fußbett als auch der Stützkörper in separaten Herstellungsschritten gefertigt werden müssen. Die so separat hergestellten Bauteile aus dem Stand der Technik bekannter Schuheinlegesohlen müssen dann in einem weiteren Verfahrensschritt zusammengebracht werden, um eine Einheit zu bilden, die sich während der Benutzung nicht auflöst. Dabei ist bei einem Zusammensetzen herkömmlicher bekannter Schuheinlegesohlen, die eine orthopädische Wirkung erfüllen sollen, wichtig, dass die Bestandteile an den orthopädisch richtigen Stellen angeordnet sind, um kein unangenehmes Tragegefühl oder gar Schmerzen beim Träger der orthopädischen Schuheinlage zu verursachen. Darüber hinaus weisen die meisten aus dem Stand der Technik bekannten orthopädische Schuheinlegesohlen ein relativ hohe Gewicht auf, was den Einsatz solcher Sohlen, insbesondere in Sport- und Ausgehschuhen, nicht besonders attraktiv macht.

Beispielsweise zeigen US 2017/0027277 A1 und WO 2016/191498 A1 jeweils eine mehrkomponentige Einlegesohle mit einem Grundkörper, bspw. aus EVA-Material, mit Ausnehmungen in orthopädisch relevanten Bereichen, in die nachträglich, zur Anpassung der Einlegesohle an den Träger, unterschiedlich orthopädisch wirksame Komponenten mit unterschiedlichen Materialeigenschaften eingelegt und gegebenenfalls austauschbar befestigt werden können, um die Einlegesohle zu vervollständigen.

DE 10 2018 206 906 A1 zeigt einen Einlegesohlen-Fräsblock zum Herstellen von Einlegesohlen mittels Fräsen und/oder Schleifen. Der Fräsblock zeigt eine im Wesentlichen flächig ausgebildete elastische EVA-Einlege-Schicht auf die mittels des RIM-Schäumverfahrens eine PU-Schaumkunststoff-Schicht aufgetragen wird, die später mittels Fräsen und/oder Schleifen bearbeitbar ist.

Es ist daher Aufgabe der Erfindung einen orthopädischen Schuheinlegesohlenrohling bereitzustellen, der in seiner Herstellung einfach und kostengünstig ist. Zudem soll ein orthopädischer Schuheinlegesohlenrohling angegeben werden, dessen Einzelteile nicht nur zuverlässig miteinander verbunden sind, sondern bei dem die Positionierung der orthopädisch wirksamen Bauteile zuverlässig an den orthopädisch vorbestimmten Stellen angeordnet ist. Zudem ist es Aufgabe der Erfindung, das relative Eigengewicht einer orthopädisch wirksamen Schuheinlegesohle gegenüber bekannten orthopädisch wirksamen Schuheinlegesohlen zu reduzieren.

Die Aufgabe der Erfindung wird durch die im Anspruch 1 angegebenen Merkmale gelöst, wobei im Anspruch 12 ein zugehöriges Verfahren zur Herstellung eines solchen orthopädischen Schuheinlegesohlenrohlings gemäß der Erfindung angegeben ist.

Der erfindungsgemäße, orthopädische Schuheinlegesohlenrohling ist mehrschichtig aufgebaut und zeigt auf seiner dem Fuß zugewandten Oberseite einen Polsterkörper aus geschäumten EVA-Plattenmaterial, das drei-dimensional so verformt ist, dass es ein orthopädisch wirksames, drei-dimensional ausgebildetes Fußbett zeigt. Auf der fußabgewandten des EVA-Plattenmaterials ist zumindest in Teilbereichen des EVA-Plattenmaterials eine flexible Lage aufgeklebt, die zumindest in Teilbereichen für PU-Schaumkunststoff undurchlässig ist. An diese flexible Lage ist, zumindest in Teilbereichen der flexiblen Lage, auf der dem EVA-Plattenmaterial abgewandten Seite, ein im RIM-Verfahren drei-dimensional geformter Stützkörper aus PU-Schaumkunststoff angeschäumt.

Der erfindungsgemäße orthopädische Schuheinlegesohlenrohling weist auf seiner fußzugewandten Oberseite einen Polsterkörper auf, der aus geschäumten EVA-Plattenmaterial gebildet wird. EVA-Plattenmaterial, das erfindungsgemäß zur Verwendung kommt, ist ein Plattenmaterial, welches bevorzugt aus einem expandierten EVA-Material hergestellt wird. Expandiertes EVA-Plattenmaterial weist ein geringes Raumgewicht auf und kann als Plattenmaterial, beispielsweise aus einem großen EVA-Block, scheibenförmig abgeschnitten sein oder durch ein sogenanntes Expansions-Extrudierverfahren hergestellt werden. Das EVA-Plattenmaterial weist erfindungsgemäß bevorzugt eine Plattenstärke von einigen Millimetern auf, jedoch kann die Dicke je nach Anwendungsfalls, bzw. je nach herzustellenden orthopädischen Schuheinlegesohlenrohling variieren. Vorstellbar ist dabei auch, dass die Plattenstärke in Längs- und/oder Querrichtung der Schuhsohle nicht konstant ist, auch wenn dies erfindungsgemäß bevorzugt ist. Erfindungsgemäß kann das zum Einsatz kommende EVA-Plattenmarerial somit ggf. in den Bereichen, die später den Vorderfußbereich bilden, ausgedünnt sein, um dem Vorderfußbereich in einem Schuh platzsparend auszugestalten. Andererseits ist erfindungsgemäß ebenfalls vorstellbar den Bereich des EVA-Plattenmaterials, welcher später den Fersenbereich bildet, entsprechend dicker auszuführen, um die Dämpfungseigenschaften in diesem Bereich zu erhöhen. Ein Fachmann erkennt dabei, dass ein EVA-Plattenmaterial, welches eine konstante Plattenstärke aufweist, günstiger ist in der Herstellung, als ein EVA-Plattenmaterial mit variierender Plattenstärke.

Weiter erfindungsgemäß kann das EVA-Plattenmaterial perforiert ausgestaltet sein, d.h. es weist Durchgangsöffnungen auf. Solche Durchgangsöffnungen erhöhen die Atmungsaktivität. Durch solche Öffnungen kann die Luft innerhalb des Schuhs besser zirkulieren. Weiterhin kann mit einer perforierten Ausgestaltung des EVA-Plattenmaterials die Härte des Materials eingestellt werden, bzw. die Dämpfungseigenschaften verbessert werden. Hierbei können die Perforationsöffnungen bevorzugt alle denselben Durchmesser aufweisen, wobei auch hier für spezielle Ausgestaltungen und zum Erzielen unterschiedlicher Härtegrade bzw. Dämpfungseigenschaften die Größe der Perforationsöffnungen variiert werden kann. Dabei ist vorstellbar, dass die Perforationsöffnungen, welche in einem Vorderfußbereich einer Schuheinlage zum Liegen kommen, größer ausgestaltet sind als beispielsweise in einem Mittelfußbereich, in dem eine stärkere Stützwirkung eventuell gewünscht ist. Ein Analoges gilt für den Fersenbereich, der speziell für orthopädische Schuheinlegesohlen, die für Diabetiker geeignet sein sollen, bevorzugt weicher ausgestaltet ist, indem bspw. die, die Perforation bildenden Öffnungen größer sind als in anderen Bereichen der Schuheinlage. Auch hier erkennt der Fachmann, dass eine homogene Ausführung der Größe der Perforationsöffnungen zu einem günstigeren EVA-Plattenmaterial führt, jedoch mit Hilfe der Variation dieser Perforationsöffnungen die Härte des Polsterkörpers der erfindungsgemäßen orthopädischen Schuheinlegesohlenrohling einstellbar ist.

Aus dem obigen erkennt der Fachmann ferner, dass für eine spezifische Einstellung der Härte des Polsterkörpers der erfindungsgemäßen orthopädischen Schuheinlegesohlenrohlings sowohl durch Variieren der Plattendicke als auch durch Variieren der Größe der Perforationsöffnungen individueller gestaltet werden kann. Weiter erkennt der Fachmann, dass für den erfindungsgemäßen orthopädischen Schuheinlegesohlenrohling auch mehrschichtige EVA-Plattenmaterialien mit unterschiedlicher Härte und/oder Farbgebung zum Einsatz kommen können.

Erfindungsgemäß wird der Polsterkörper, also die fußzugewandte Seite des erfindungsgemäßen orthopädischen Schuheinlegesohlenrohlings durch ein EVA-Plattenmaterial gebildet, welches im nicht verformten Zustand plattenförmig, d.h. im Wesentlichen flächig bzw. eben ausgebildet ist, eben in Art einer Platte oder Scheibe. Dabei besteht das erfindungsgemäß bevorzugt zum Einsatz kommende EVA-Plattenmaterial aus einem expandierten EVA-Schaumkunststoff-Material, welches ein geringes Raumgewicht aufweist. Hierbei werden erfindungsgemäß bevorzugt EVA-Plattenmaterialien verwendet, die ein Raumgewicht von weniger als 10 kg pro Kubikmeter (10 kg/m³) aufweisen, weiter bevorzugt weniger als 6 kg/m³ und weiter bevorzugt weniger als 4 kg/m³.

Das erfindungsgemäß verwendete EVA-Plattenmaterial ist ferner bevorzugt ein EVA-Material, das durch Schleifen bearbeitbar ist, um so den erfindungsgemäß hergestellten orthopädischen Schuheinlegesohlenrohling durch Schleifen von einem Orthopädietechniker oder einem Orthopädieschuhmacher individuell an die Fußform eines Trägers einer orthopädischen Schuheinlage anpassbar zu machen. Eine solche individuelle Anpassung eines orthopädischen Schuheinlegesohlenrohlings durch einen Orthopädiefachmann mittels Schleifen ist dabei eine gängige Vorgehensweise, die dem Fachmann bekannt ist.

Weiter erfindungsgemäß ist auf der Seite des zum Einsatz kommenden EVA-Plattenmaterials, die in dem späteren orthopädischen Schuheinlegesohlenrohling gemäß der Erfindung dem Fuß abgewandt ist, eine flexible Lage aufgeklebt. Dabei kann die auf das EVA-Plattenmaterial aufgeklebte flexible Lage vollflächig den gesamten Schuhsohlenbereich, also den Vorderfußbereich bis zum Fersenbereich überdecken oder nur Teilbereiche, wie bspw. nur den Mittelfuß- und/oder Endfußbereich bzw. Fersenbereich. Die flexible Lage wird erfindungsgemäß insbesondere in diesen Bereichen einer Schuhsohle auf die fußabgewandte Seite des EVA-Plattenmaterials aufgeklebt, an denen ein Stützkörper aus PU-Schaumkunststoff angebracht werden soll. Hierzu ist die flexible Lage derart beschaffen, dass sich eine Seite der flexiblen Lage mit dem EVA-Plattenmaterial verkleben lässt und die andere Seite mit einem PU-Schaumkunststoff eine stoffflüssige Verbindung eingeht. Dabei ist die flexible Lage mit Komponenten aus dem der PU-Schaumkunststoff hergestellt wird, (ein Polyol und ein Isocyanat) stoffschlüssig verbindbar. Für die Ausgestaltung der flexiblen Lage gibt es eine Vielzahl von Möglichkeiten, wobei die flexible Lage nicht notwendigerweise einschichtig ausgebildet sein muss. Oftmals wird bevorzugt eine mehrschichtige flexible Lage zum Einsatz kommen, da ein Material, welches sich gut mit einem EVA-Material verkleben lässt, oftmals nicht geeignet ist, mit dem erfindungsgemäß verwendeten PU-Schaumkunststoff eine Verbindung einzugehen, und umgekehrt. Bei einschichtig verwendeten flexiblen Lagen, die sich bevorzugt gut mit dem PU-Schaumkunststoff verbinden, kann die Seite der flexiblen Lage, welche mit dem EVA-Plattenmaterial verklebt werden soll, oberflächenrau ausgebildet werden, etwa in Art eines Vlieses, um die Klebeigenschaften der Oberfläche, die sich mit dem EVA-Plattenmaterial verbinden soll, zu verbessern.

Als zum Einsatz kommende Klebstoffe können hier Heißkleber genannt werden, welche bei Temperaturen oberhalb der Körpertemperatur aktivierbar sind. Jedoch sind hier zum Verkleben der flexiblen Lage mit dem EVA-Plattenmaterial auch andere, herkömmlich im Stand der Technik bekannte Klebstoffe, wie bspw. Zwei-Komponentenklebstoffe, vorstellbar. Bevorzugt wird erfindungsgemäß die flexible Lage jedoch mit einem Heißkleber mit dem EVA-Plattenmaterial verbunden.

Die dem EVA-Plattenmaterial abgewandte Seite der flexiblen Lage weist erfindungsgemäß die Eigenschaft auf, sich gut mit PU-Schaumkunststoff zu verbinden, da erfindungsgemäß zumindest in Teilbereichen des orthopädischen Schuheinlegesohlenrohlings gemäß der Erfindung an diese dem EVA-Plattenmaterial abgewandte Seite der flexiblen Lage ein Stützkörper aus PU-Schaumkunststoff in einer drei-dimensionalen Ausgestaltung angeschäumt ist. Dazu kann es bevorzugt sein, eine Schicht der flexiblen Lage so auszugestalten, dass die flexible Lage insgesamt für PU-Schaumkunststoff und dessen Komponenten undurchlässig ist.

Wie bereits oben angesprochen, kann die flexible Lage die Schuhsohle auf der Unterseite des EVA-Plattenmaterials vollständig überdecken, wodurch es möglich ist, den erfindungsgemäß angeschäumten Polsterkörper ebenfalls vollflächig auf der Unterseite der Schuheinlegesohle auszubilden. Ein Fachmann erkennt, dass dies nicht zwingend erforderlich ist und der aus PU-Schaumkunststoff geschäumte Stützkörper auch nur in einem Teilbereich oder in mehreren Teilbereichen der flexiblen Lage ausgebildet sein kann.

Der erfindungsgemäß an die Unterseite der flexiblen Lage angeschäumte Stützkörper aus PU-Schaumkunststoff ist dabei im RIM-Verfahren an die dem EVA-Plattenmaterial abgewandte Seite der flexiblen Lage angeschäumt. Bekanntermaßen arbeitet das RIM-Schäumverfahren mit einem Polyol und einem Isocyanat, die vermischt über einen Mischkopf in eine Schäumform eingebracht werden, in der diese beiden Komponenten mit einander reagieren, um den PU-Schaumkunststoff auszubilden. Erfindungsgemäß ist der aus im RIM-Schäumverfahren erzeugte PU-Schaumkunststoff-Stützkörper dreidimensional ausgebildet und zeigt zumindest partiell eine drei-dimensionale Schuhsohlenform bzw. eine Negativform eines Schuhinneren eines Schuhs, in den der orthopädische Schuheinlegesohlenrohling eingelegt werden soll. Mit andere Worten, der PU-Schaumkunststoff-Stützkörper bildet gemäß der Erfindung in Teilbereichen eine negative Schuhinnenform aus und zwar in Bereichen, in denen das erfindungsgemäß verwendete EVA-Plattenmaterial zumindest teilweise durch eine flexible Lage, wie oben beschrieben, überdeckt ist.

Weiter erfindungsgemäß kann somit die Fläche, die die flexible Lage abdeckt, größer sein als die projizierte Schuhsohlenfläche des PU-Schaumkunststoff-Stützkörpers. Zwar ist es vorstellbar, dass der Stützkörper auch in Bereichen ausgebildet wird, in denen das EVA-Plattenmaterial nicht durch eine flexible Lage überdeckt ist, jedoch ist dann eine sichere Verbindung zwischen dem Stützkörper und EVA-Material nicht mehr gegeben. Verwendet man ein perforiertes EVA-Plattenmaterial kann der in einer RIM-Schäumform erzeugte PU-Schaumkunststoff durch die Perforationsöffnungen treten. Dies verbessert zwar die Verbindung zwischen den PU-Schaumkunststoff und dem EVA-Material, jedoch verliert das EVA-Material dadurch zumindest teilweise seine Dämpfungseigenschaften. Erfindungsgemäß ist daher bevorzugt den PU-Schaumkunststoff-Stützkörper nur in den Bereichen auszubilden, in der die flexible Lage den PU-Schaumkunststoff vom EVA-Plattenmaterial trennt.

Wie oben bereits zum EVA-Plattenmaterial ausgeführt, ist auch das erfindungsgemäß zum Einsatz kommende PU-Schaumkunststoffmaterial für den Stützkörper im ausgehärteten Zustand schleifbar, so dass auch die Unterseite des erfindungsgemäßen orthopädischen Schuheinlegesohlenrohlings individuell anpassbar ist und dies sowohl an den Schuh, in den eine orthopädische Schuheinlage eingelegt werden soll, als auch an den Fuß des Trägers einer solchen orthopädischen Schuheinlage. Somit ist der erfindungsgemäße orthopädische Schuheinlegesohlenrohling sowohl auf seiner Oberseite als auch auf der Unterseite den individuellen Bedürfnissen des Trägers einer orthopädischen Schuheinlage anpassbar und kann optimal die gewünschte orthopädische Wirkung entfalten. Nach einem solchen Schleifen ist das Erscheinungsbild oftmals nicht mehr so ansprechend. Dem kann dadurch abgeholfen werden, dass sowohl die Oberseite als auch die Unterseite eines erfindungsgemäßen Schuheinlegesohlenrohlings mit einer Decke bezogen werden kann. Gleichzeitig mit dem Beziehen mit einer Decke - oder auch zwei Decken - können weitere orthopädisch wirksame Elemente in die Schuheinlage eingebracht werden, wie beispielsweise Pelotten oder Keile. Dies ist ein fachübliches Vorgehen und dem einschlägigen Fachmann bekannt.

Das erfindungsgemäße Verfahren zum Herstellen eines orthopädischen Schuheinlegesohlenrohlings gemäß der Erfindung mit einem oberseitigen dreidimensional ausgebildeten Fußbett aus geschäumten EVA-Plattenmaterial und einem im RIM-Verfahren erzeugten PU-Schaumkunststoff-Stützteil an der Unterseite weist die folgenden Schritte auf, wobei die ersten beiden Schritte in zwei Alternativen ausführbar sind. Hierzu im Einzelnen:
In der ersten Alternative wird in einem ersten Schritt das erfindungsgemäß zum Einsatz kommende geschäumte EVA-Plattenmaterial in eine erste Formhälfte einer RIM-Schäumform eingelegt. Diese erste Formhälfte der RIM-Schäumform formt die Oberseite des erfindungsgemäßen orthopädischen Schuheinlegesohlenrohlings dreidimensional, d.h. die formgebende Oberfläche der ersten Schäumformhälfte zeigt eine Negativform des auszubildenden Fußbettes. Das heißt weiter, dass die formgebende Oberfläche der ersten Schäumformhälfte drei-dimensional ausgebildet ist und im Wesentlichen eine Fußsohlenform zeigt. Damit kann auf dem erfindungsgemäßen orthopädischen Schuheinlegesohlenrohling eine Negativform der Fußsohlenform ausgebildet werden.

In einem zweiten Schritt der ersten Alternative wird auf die Seite des bereits in die erste Schäumform eingelegten EVA-Plattenmaterials, welche der Kavität zugewandt ist, eine flexible Lage aufgebracht bzw. angebracht. Erfindungsgemäß weist dabei mindestens eine der beiden Flächen, die des EVA-Plattenmaterials oder die der flexiblen Lage, die aufeinander zu liegen kommen, eine Klebeschicht auf, sodass das EVA-Plattenmaterial und die flexible Lage miteinander verklebbar sind. Vorstellbar ist hier auch, dass alternativ oder sowohl das EVA-Plattenmaterial als auch die flexible Lage eine derartige Klebeschicht aufweisen, was jedoch von der Verwendung des jeweiligen Klebers abhängt. Erfindungsgemäß ist es nach dem Einlegen der flexiblen Lage in die erste Schäumformhälfte, bzw. nach dem Auflegen der flexiblen Lage auf die bereits eingelegte EVA-Platte nicht erforderlich, dass sich die beiden Bauteile schon nach diesem Einlege-Verfahrensschritt miteinander verkleben. Erfindungsgemäß kommt bevorzugt ein Heißkleber zur endfesten Verbindung des EVA-Plattenmaterials mit der flexiblen Lage zum Einsatz, der bei Temperaturen höher als die Körpertemperatur aktivierbar ist. Bei einem solchen Vorgehen ist daher das Einlegen bzw. Auflegen/Aufspannen derflexiblen Lage auf das EVA-Plattenmaterial bevorzugt eine einfache, schwache Anhaftung der flexiblen Lage auf dem EVA-Plattenmaterial.

In der zweiten Alternative für die beiden ersten Schritte des erfindungsgemäßen Verfahrens wird die flexible Lage vor dem Einlegen des EVA-Plattenmaterials mit diesem EVA-Plattenmaterial verbunden, beispielsweise ebenfalls mittels einer Heißklebeschicht. Im Unterschied zur ersten Alternative der beiden ersten Schritte des erfindungsgemäßen Verfahrens wird hier somit eine Vormontagegruppe erzeugt, indem die flexible Lage bereits vor dem Einlegen in die erste Schäumformhälfte auf das EVA-Plattenmaterial aufgebracht wird. Auch hierbei ist es nicht zwingend erforderlich, dass die Verbindung zwischen der flexiblen Lage und dem EVA-Plattenmaterial bereits eine zuverlässige endfeste Klebeverbindung ausbildet. Es reicht, die beiden Bauteile so miteinander zu verbinden, dass ein sicheres Handling möglich ist. Dies ist ausreichend, da dann die Vormontagegruppe im zweiten Schritt der zweiten Alternative, so in die RIM-Schäumform eingelegt wird, dass das EVA-Plattenmaterial zur formgebenden Oberfläche der Schäumformhälfte zeigt, bzw. die flexible Lage der Kavität der Schäumform zugewandt ist.

Nachdem die beiden ersten und zweiten Schritte des erfindungsgemäßen Verfahrens vollzogen sind, ist nach Abschluss dieser Schritte das gleiche Ergebnis erreicht, sodass die formgebende Oberfläche der ersten Schäumformhälfte zumindest teilweise mit einem EVA-Plattenmaterial überdeckt ist, wobei das Plattenmaterial wiederum zumindest teilweise mit einer flexiblen Decke überdeckt ist und zwischen den beiden Bauteilen eine Kleberschicht angeordnet ist.

Die nächsten Schritte des erfindungsgemäßen Herstellverfahrens sind nun für beide Alternativen gleich. In einem dritten Schritt wird in die andere, zweite Schäumformhälfte, welche die Unterseite des erfindungsgemäßen orthopädischen Schuheinlegesohlenrohlings formt, die Komponenten eingebracht, welche zu PU-Schaumkunststoff aufschäumen. Diese Komponenten, üblicherweise Polyol und ein Isocyanat, werden mittels eines Mischkopf flüssig in die Schäumform eingebracht und können unter Bildung des PU-Schaumkunststoffs in der Schäumform reagieren bzw. expandieren. Nachdem die Komponenten in die untere Schäumformhälfte eingebracht wurden, wird die Schäumform geschlossen, sodass der entstehende PU-Schaumkunststoff zumindest in den Bereichen, in der das EVA-Plattenmaterial mit der flexiblen Lage versehen ist, den verbleibenden Hohlraum in der RIM-Schäumform ausfüllt und die flexible Lage anschäumt. Aufgrund der PU-Schaumkunststoff affinen Eigenschaft der flexiblen Lage - zumindest auf der Seite, die der Kavität zugewandt ist - verbindet sich der in der Kavität expandierende PU-Schaumkunststoff mit der flexiblen Lage stoffschlüssig bzw. unlösbar. Nachdem die eingebrachten, den PU-Kunststoff erzeugenden Komponenten expandiert sind, bzw. ausreagiert haben, und das Stützteil an die Seite der flexiblen Lage drei-dimensional angeschäumt wurde, die dem EVA-Plattenmaterial abgewandt ist, kann die RIM-Schäumform geöffnet werden und der orthopädische Schuheinlegesohlenrohling gemäß der Erfindung entnommen werden.

Nach Entnahme des Schuheinlegesohlenrohlings aus der RIM-Schäumform kann dieser in eine Schuhsohlenform zugeschnitten bzw. ausgestanzt werden. Im Allgemeinen wird man das erfindungsgemäße Verfahren so ausgestalten, dass in einer RIM-Schäumform ein Paar Schuheinlegesohlenrohlinge gleichzeitig ausgeformt werden können. Dazu ist das EVA-Plattenmaterial als auch die flexible Lage in einer entsprechenden Größe über die beiden Formnester der ersten Schäumformhälfte zu legen und ggfs. zu fixieren. Durch die Reaktion der beiden dem PU-Schaumkunststoff erzeugenden Komponenten entsteht als Nebenprodukt Wärme, die dazu genutzt werden kann den erfindungsgemäß bevorzugt verwendeten Heißkleber zu aktivieren und so durch den Schließdruck der Schäumform und der bei der Expansionsreaktion entstehende Wärme die flexible Lage fest mit dem EVA-Plattenmaterial zu verkleben. Somit ist in einer erfindungsgemäßen Ausführung kein zusätzlicher Heißklebeschritt notwendig, wie dies im Stand der Technik oftmals der Fall ist. Durch die Schließkraft der Schäumform und dem expandierenden PU-Schaumkunststoff erfolgt, wird ausreichend Wärme und Kraft für den Klebevorgang erzeugt. Im Fall, dass die Expansionsreaktion die erforderliche Wärme nicht bereitstellen kann, bspw. aufgrund dessen, dass das Stützteil relativ klein ausgestaltet ist, kann jedoch ein zusätzliches Anwärmen der RIM-Schäumform vorgesehen werden. Der hierfür benötigte Energieeinsatz wird jedoch in allen Fällen geringer sein als bei einem separaten Heißklebeschritt, in dem bspw. die flexible Lage mit dem EVA-Plattenmaterial verklebt werden soll. Daher reicht es erfindungsgemäß aus, das EVA-Plattenmaterial zusammen mit der flexiblen Lage, wie oben beschrieben, so in die erste Schäumformhälfte einzulegen, dass die beiden Lagen (Platte und Lage) bspw. bei einem Schließen der Schäumform nicht voneinander getrennt werden. Eine endfeste Verklebung in diesem Verfahrensschritt nicht erforderlich.

Das erfindungsgemäße Anschäumen eines Stützteils aus PU-Schaum an die flexible Lage kann, wie der Fachmann erkennt, in einem Bereich aber auch in mehreren Bereichen einer Schuheinlage erfolgen. So ist es beispielsweise vorstellbar einen Stützbereich im Fersenbereich auszubilden sowie eine Pelotte, bspw. im Mittelfußbereich, separat an eine flexible Lage anzuschäumen. Weiterhin ist es von der Erfindung umfasst, unterschiedliche Härten von PU-Schäumen zu verwenden, die bspw. voneinander separiert sind, aber auch ineinander fließen können, wenn die PU-Schäume expandieren. Damit ist eine weitere Möglichkeit geschaffen sowohl die Stützwirkung als auch die Dämpfungseigenschaften des erfindungsgemäßen Schuheinlegesohlenrohlings in verschiedenen Bereichen verschiedenen Bedürfnissen anzupassen. Je nachdem, ob die aus dem erfindungsgemäßen Schuheinlegesohlenrohling gefertigte orthopädische Schuheinlage für Fußfehlstellungen, wie z.B. Spreizfüße oder Senkfüße oder für Diabetiker geeignet sein soll, können somit unterschiedliche Härte- und Dämpfungsbereiche erzielt werden. Somit ist das erfindungsgemäße Verfahren flexibel an unterschiedliche orthopädische Vorgaben für Schuheinlegesohlenrohlinge anpassbar. Zudem sind bspw. mehrere unterschiedlich gestaltete zweite Schäumformhälften verwendbar, wobei für jede zweite Schäumformhälfte ein oder mehr verschiedene Härten aufweisende PU-Schaumkunststoffsysteme zur Anwendung kommen können.

Erfindungsgemäß kann vor dem Schritt des Einlegens des EVA-Plattenmaterials mit und ohne daran anhaftender flexiblen Lage eine mit einer Klebeschicht versehene Decke in die erste Schäumform eingelegt werden, sodass eine solche Decke mit Schließen der Schäumform auf den EVA-Polsterkörper aufgezogen wird.

Der erfindungsgemäße orthopädische Schuheinlegesohlenrohling kann jedoch auch in einem weiteren Verfahrensschritt mit einer Decke auf der Oberseite und/oder Unterseite bezogen werden, bspw. in einem Bügelverfahren oder ähnlichem. Andererseits kann eine solche Decke auch separat jedoch zusammen mit dem im erfindungsgemäßen Verfahren hergestellten orthopädischen Schuheinlegesohlenrohlings an einen Orthopädieschuhtechniker ausgeliefert werden. Dieser bringt dann nach einer individuellen Anpassung des orthopädischen Schuheinlegesohlenrohlings, bspw. durch Schleifen oder Fräsen, eine entsprechende Decke zu Erhöhung des Tragekomforts und/oder zur Verbesserung der Ästhetik des orthopädischen Schuheinlegesohlenrohlings auf.

Die obigen Erläuterungen zum erfindungsgemäßen orthopädischen Schuheinlegesohlenrohling und zum erfindungsgemäßen Verfahren zur Herstellung eines solchen orthopädischen Schuheinlegesohlenrohlings werden im Folgenden anhand von Figuren an einem bevorzugten Ausführungsbeispiel näher detailliert. Dabei sollen die im Weiteren gemachten Erläuterungen den Erfindungsgedanken nicht auf dieses Ausführungsbeispiel einschränken, sie dienen lediglich der Anschaulichkeit. Es zeigen:
- Figur 1: schematisch einen erfindungsgemäßen orthopädischen Schuheinlegesohlenrohling;
- Figur 2: schematisch einen Längsschnitt durch den erfindungsgemäßen orthopädischen Schuheinlegesohlenrohling gemäß Figur 1;
- Figur 3: schematisch einen Querschnitt durch den erfindungsgemäßen orthopädischen Schuheinlegesohlenrohling gemäß Figur 1;
- Figur 4: schematisch ein Ablaufdiagramm des erfindungsgemäßen Verfahrens zur Herstellung eines erfindungsgemäßen orthopädischen Schuheinlegesohlenrohlings;
- Figur 5: schematisch einen Längsschnitt durch einen erfindungsgemäßen orthopädischen Schuheinlegesohlenrohling nach Entnahme aus der Schäumform;

Die beiliegenden Figuren zeigen schematisch bevorzugte Ausführungsbeispiele der Erfindung, wobei für eine bessere Lesbarkeit gleiche Bauteile mit denselben Bezugszeichen versehen wurden.

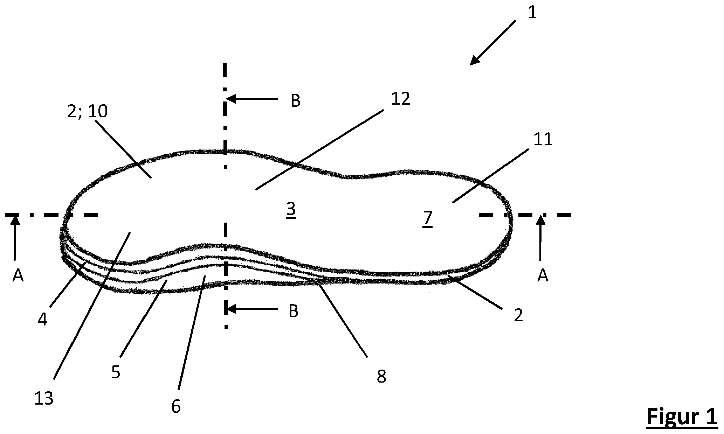

Figur 1 zeigt schematisch in einer perspektivischen Darstellung einen erfindungsgemäßen orthopädischen Schuheinlegesohlenrohling 1 mit einem anatomischen Fußbett 3, welches aus einem verformten EVA-Plattenmaterial 2 gebildet ist und einen Polsterkörper 10 des erfindungsgemäßen, orthopädischen Schuheinlegesohlenrohlings 1 bildet. Auf der dem Fuß eines Trägers der Schuheinlegesohle abgewandten Seite des erfindungsgemäßen Schuheinlegesohlenrohling ist eine flexible Lage 4 angeordnet, welche den Schuheinlegesohlenrohling 1 nur im Fersen- und im Mittelfußbereich unterdeckt. Auf der Unterseite 8 ist ein Stützteil 6 aus PU-Schaumkunststoff 5 im Bereich der flexiblen Lage 4 an die selbige angeschäumt. Somit bildet das EVA-Plattenmaterial 2 im Vorderfußbereich 11 sowohl die Oberseite 7 als auch die Unterseite 8 des erfindungsgemäßen orthopädischen Schuheinlegesohlenrohlings 1. Im Mittelfußbereich 12 und im Fersenbereich 13 wird die Unterseite des erfindungsgemäßen orthopädischen Schuheinlegesohlenrohlings 1, der in Figur 1 gezeigt ist, durch das PU-Schaumkunststoff-Stützteil 6 gebildet.

Der exemplarisch in Figur 1 gezeigt erfindungsgemäße orthopädische Schuheinlegesohlenrohling 1 weist eine flexible Lage 4 lediglich im Fersen- und Mittelfußbereich zwischen dem PU-Stützteil 6 und dem EVA-Plattenmaterial 2 auf. Die flexible Lage 4 ermöglicht im Mittelfußbereich 12 als auch im Fersenbereich 13, dass ein PU-Stützteil 6 an den orthopädischen Schuheinlegesohlenrohling angeschäumt werden kann. Die flexible Lage 4, welche mit dem EVA-Plattenmaterial 2 verklebt ist, dient somit als eine Art Haftvermittler zwischen dem EVA-Plattenmaterial 2 und dem PU-Schaumkunststoff 5. Eine solche Haftvermittlung kann fachüblich durch unterschiedlichste flexible Lagen 4 erfolgen, ist jedoch insofern erforderlich als sich EVA-Plattenmaterial üblicherweise nicht gut mit PU-Schaumkunststoff verbinden lässt. Erfindungsgemäß wird hier eine flexible Lage 4 als Zwischenlage verwendet, welche auf der einen Seite - der dem EVA-Plattenmaterial 2 zugewandten Seite - eine Klebeschicht aufweist, die sich mit EVA-Material verbinden lässt. Hier können beispielsweise Heißkleber eingesetzt werden, die auf eine bspw. Vlies-artige Oberflächenstruktur der flexiblen Lage 4 aufgetragen sind. Durch die Reaktionswärme beim Schäumen des Stützteils 6 wird der Heißkleber aktiviert und durch die Zuhaltekraft der Schäumform an das EVA-Plattenmaterial 2 angedrückt.

Auf der dem EVA-Plattenmaterial 2 abgewandten Seite der flexiblen Lage 4 ist, wie bereits erwähnt, ein Stützteil 6 aus PU-Schaumkunststoff 5 angeschäumt. Dies ist erfindungsgemäß möglich, da die flexible Lage 4 erfindungsgemäß so ausgestaltet ist, dass sich die Seite der flexiblen Lage 4, welche vom EVA-Plattenmaterial 2 abgewandt ist, so ausgestaltet ist, dass sie sich gut mit PU-Schaumkunststoff 5 verbinden lässt. Somit lässt sich mit der flexiblen Lage 4 gewährleisten, dass die Komponenten des erfindungsgemäßen orthopädischen Schuheinlegesohlenrohlings 1 fest miteinander verbundenen sind und eine sichere und positionsgenaue Anordnung der orthopädisch wirksamen Teile gewährleistet ist.

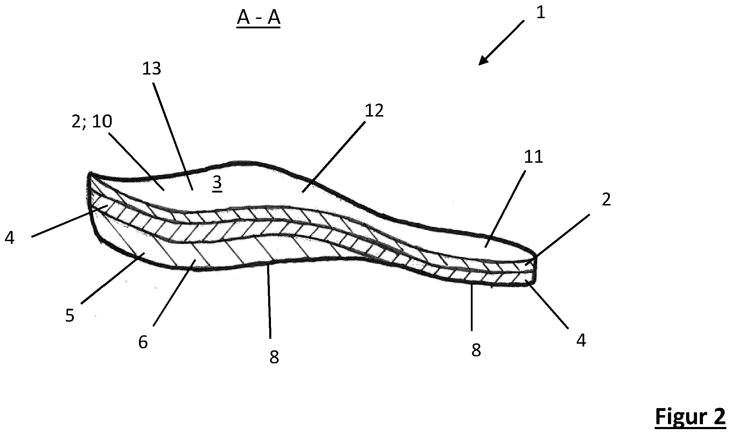

Mit Figur 2 ist schematisch ein Längsschnitt durch den erfindungsgemäßen Schuheinlegesohlenrohling 1 gemäß Figur 1 gezeigt, auf dessen Oberseite 7 das verformte EVA-Plattenmaterial 2 ausgebildet ist, derart dass es ein anatomisch geformtes Fußbett bildet. Unterhalb des EVA-Plattenmaterials 2 ist eine flexible Lage 4 vollflächig angeordnet und überdeckt unterdeckt in dieser Ausführungsform auch den Vorderfußbereich 11. Im Fersenbereich 13 als auch im Mittelfußbereich 12 ist wiederum ein orthopädisch wirksames Stützteil 6 an die flexible Lage 4 mittels PU-Schaumkunststoff 5 angeschäumt. In diesem Ausführungsbeispiel 4 wird die Unterseite 8 des erfindungsgemäßen Schuheinlegesohlenrohlings somit durch das orthopädisch wirksame Stützteil 6 als auch durch die flexible Lage 4 gebildet.

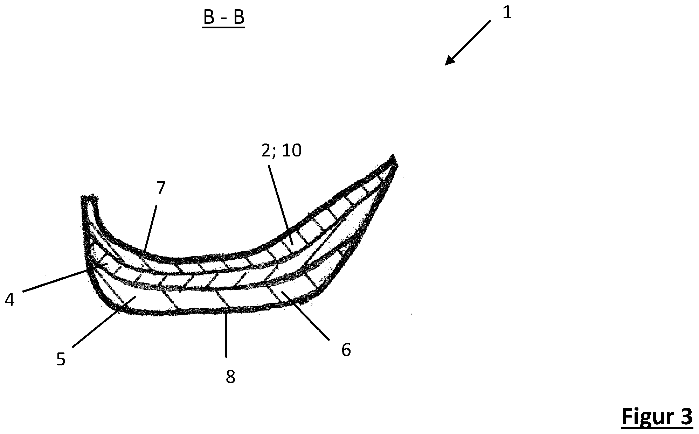

Figur 3 zeigt weiter einen schematischen Querschnitt durch den erfindungsgemäßen orthopädischen Schuheinlegesohlenrohling 1 gemäß Figur 1, wobei auch hier die Oberseite 7 durch das drei-dimensional verformte EVA-Plattenmaterial 2 gebildet wird. Unterhalb des EVA-Plattenmaterials 2 ist wiederum die haftvermittelnde flexible Lage 4 angeordnet, an die, auf ihrer einem Fuß eines Schuheinlegesohlenträgers abgewandten Seite, ein Stützkörper 6 aus PU-Schaumkunststoff 5 angeschäumt ist. In dem Schnitt gemäß Figur 3, welcher durch den Mittelfußbereich 12 des erfindungsgemäßen Schuheinlegesohlenrohling 1 führt, bildet das PU-Stützteil 6 die Unterseite 8 des Schuheinlegesohlenrohlings 1 gemäß der Erfindung. Die Oberseite 7 wird wiederum durch das EVA-Plattenmaterial 2 gebildet, das den Polsterkörper 10 der orthopädischen Schaumkunststoff-Schuheinlegesohle bildet.

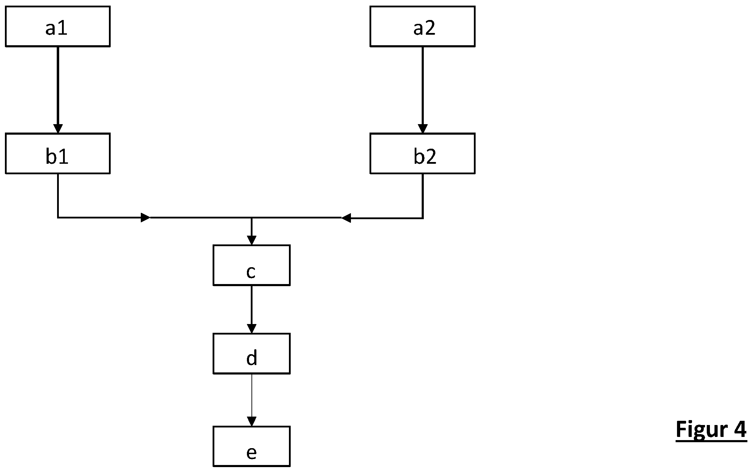

Mit Figur 4 ist schematisch ein Ablaufdiagramm für das erfindungsgemäße Verfahren zur Herstellung eines erfindungsgemäßen, orthopädischen Schuheinlegesohlenrohlings 1 gezeigt, wobei, wie eingangs schon erwähnt, die ersten beiden Schritte a1) & b1) sowie a2) & b2) alternativ ausgeführt werden können. Die sich daran anschließenden Schritte c) bis e) sind für beide Alternativen gleich.

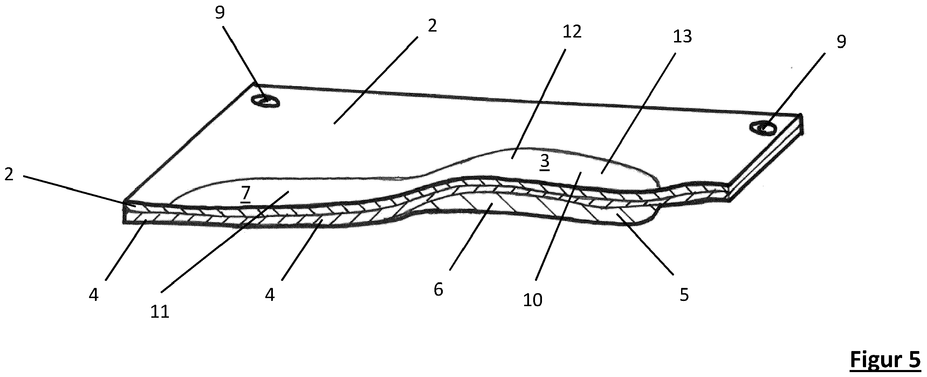

In der ersten Alternative wird in einem ersten Schritt a1) unverformtes, plattenförmiges EVA-Plattenmaterial 2 in eine erste Schäumformhälfte einer RIM-Schäumform eingelegt. Dies kann beispielsweise mit Einlegestiften, die in der Schäumform vorgesehen sind, erfolgen, wobei im EVA-Plattenmaterial 2 eingebrachte Einlegeöffnungen 9 (siehe Figur 5) daran eingehängt werden können. So kann beispielsweise das flexible EVA-Plattenmaterial 2 in eine senkrecht stehende erste Formhälfte bei geöffneter RIM-Schäumform (nicht dargestellt) mittels mehrerer Aufspannstifte fixiert werden. Einem Fachmann ist ein derartiges Vorgehen geläufig, womit weitere Ausführungen an dieser Stelle nicht erforderlich sind.

Auf das im Schritt a1) in die erste Schäumformhälfte eingelegte EVA-Plattenmaterial kann nun in der ersten Alternative des erfindungsgemäßen Verfahrens im Schritt b1) eine flexible Lage 4 auf das EVA-Plattenmaterial aufgebracht werden, bzw. angeheftet werden. Die flexible Lage 4 weist eine Klebeschicht auf, die sich bevorzugt durch Einwirkung von Druck und Wärme gut mit dem EVA-Material verbinden lässt. Nachdem die beiden Einzelteile in der ersten Schäumform derart aufgespannt sind, dass die flexible Lage 4 zur zweiten Formhälfte - also der Kavität zugewandt ist - und die formgebenden Oberflächen der ersten Schäumformhälfte zumindest teilweise überdecken, können in einem weiteren Schritt c) - welcher nun für beide Alternativen gleich ist - die Schaumkunststoff erzeugenden Komponenten zum Erzeugen des Stützteils 6 aus PU- Schaumkunststoff in die zweite Schäumformhälfte eingebracht werden. Im nächsten, wiederum für beide Alternativen gleichen Verfahrensschritt d), wird die Schäumform geschlossen und die den Schaumkunststoff erzeugenden Komponenten können miteinander ausreagieren und expandieren, unter Bildung eines PU-Schaumkunststoffs und Formen des PU-Schaumkunststoff-Stützteils 6 an der Unterseite des erfindungsgemäßen Schuheinlegesohlenrohlings. Der weitere gemeinsame Verfahrensschritt e) für beide Alternativen ist das Öffnen der RIM-Schäumform und Entnahme des erfindungsgemäßen Schuheinlegesohlenrohlings 1.

Bei der zweiten Alternative für die ersten beiden Verfahrensschritte kann in einem ersten Schritt a2) auf das EVA-Plattenmaterial 2 die flexible Lage 4 vor Einlegen in die Schäumform aufgebracht werden. Dabei weist die flexible Lage 4 auf ihrer zur EVA-Plattenmaterial zugewandten Seite einen Kleber auf, welcher jedoch in diesem Verfahrensschritt nicht zwingend eine endfeste Klebeverbindung zwischen dem EVA-Plattenmaterial 2 und der flexiblen Lage 4 herstellen muss. Jedoch kann hier auch eine bereits endfeste Verbindung zum Einsatz kommen, ohne dass die der Erfindung zugrundeliegende Idee zu verlassen wird. Es genügt allerdings, dass die beiden Schichten lediglich so stark anhaften, dass die flexible Lage 4 zusammen mit dem EVA-Plattenmaterial 2 in einem zweiten Schritt b2) der zweiten Alternative sicher als Baugruppe oder Vormontagegruppe in die erste RIM-Schäumformhälfte eingelegt und positioniert werden kann, sodass die beiden Schichten bei den weiteren Verfahrensschritten nicht gegeneinander verrutschen oder gar voneinander getrennt werden. Das Einlegen der Vormontagegruppe aus EVA-Plattenmaterial 2 und flexibler Lage 4 kann fachüblich wiederum durch Aufspannen oder Einklemmen oder in einer sonstigen geeigneten Art und Weise in die erste Schäumform erfolgen und zwar so, dass die Vormontagegruppe zumindest teilweise die formgebenden Oberflächen der ersten Schäumformhälfte überdecken und die flexible Lage 4 mit ihrer von dem EVA-Plattenmaterial abgewandten Seite zur Kavität zeigt.

Im Anschluss daran erfolgen nun wiederum die für beide Alternativen gemeinsamen Schritte c) bis e). Im Schritt c) erfolgt das Einbringen von den PU-Schaumkunststoff 5 erzeugenden Komponenten in die zweite Schäumformhälfte und zwar so, dass die den PU-Schaumkunststoff erzeugenden Komponenten auf die dort angeordneten formgebenden Oberflächen aufgebracht werden. Im nächsten Schritt d) wird die Schäumform geschlossen und die den Schaumkunststoff erzeugenden Komponenten können unter Abgabe von Wärmeenergie zu PU-Schaumkunststoff ausreagieren und expandieren. Durch diese abgegebene Reaktionswärme und durch die gleichzeitig aufgebrachte Zuhaltekraft der RIM-Schäumform kann ein Heißkleber der zwischen der flexiblen Lage 4 und dem EVA-Plattenmaterial 2 angeordnet ist, aktiviert werden und erreicht seine Endfestigkeit durch diesen Verfahrensschritt ohne weiteres Zutun. Im weiteren gemeinsamen Verfahrensschritt e) kann nach einem Aushärten bzw. nach einem vollständigem Ausreagieren des PU-Schaumkunststoffs, die RIM-Schäumform geöffnet werden und ein erfindungsgemäßer, orthopädischer Schuheinlegesohlenrohling 1 der RIM-Schäumform entnommen werden.

Mit Figur 5 ist ein nach dem Verfahrensschritt e) aus der RIM-Schäumform entnommener Schuheinlegesohlenrohling 1 schematisch in einem Längsschnitt gezeigt. Dabei ist das EVA-Plattenmaterial 2 auf der Oberseite 7 des orthopädischen Schuheinlegesohlenrohlings 1 angeordnet und derart durch die formgebenden Oberflächen der ersten Schäumformhälfte der RIM-Schäumform verformt worden, dass ein anatomisch ausgebildetes Fußbett 3 auf der Oberseite 7 des Schuheinlegesohlenrohlings entstanden ist. Dieses auf dem Polsterkörper 10 aus EVA-Plattenmaterial 2 anatomisch geformte Fußbett 3 sowie dessen orthopädische Wirkung wird dabei durch das mittels PU-Schaumkunststoff 5 an die Unterseite 8 angeschäumte Stützteil 6 verstärkt, bzw. in Form gehalten. Damit eine sichere Verbindung zwischen dem PU-Schaumkunststoff des Stützteils 6 und dem aus EVA-Plattenmaterial 2 gebildeten Polsterkörpers 10 möglich ist, ist zwischen diesen beiden Materialien eine flexible Lage 4 angeordnet, die als Haftvermittler zwischen PU-Schaumkunststoff und EVA-Material dient, da diese beiden Materialien nur schlecht direkt miteinander verklebbar sind. Erfindungsgemäß ist die flexible Lage 4 so ausgestaltet, dass diese mit einer Seite mittels einer Klebeschicht, die auf der flexiblen Lage 4 oder auf dem EVA-Plattenmaterial 2 oder auf beiden Materialien aufgebracht ist, mit dem EVA-Plattenmaterial 2 verklebt wird. Die andere Seite der flexiblen Lage 4, die dem Stützteil 6 zugewandten Seite, zeigt eine PU-Schaumkunststoff affine Materialeigenschaft, wodurch angeschäumter PU-Schaumkunststoff stoffschlüssig an die flexible Lage 4 angebunden/angeschäumt werden kann.

Mit den obigen Ausführungsbeispielen wurde eine einfache Ausführungsform der erfindungsgemäßen orthopädischen Schuheinlegesohle beschrieben, wobei der Fachmann jedoch erkennt, dass vielfältige Modifikationen und Änderungen im Bereich des fachmännischen Könnens möglich sind, die durch den Erfindungsgedanken abgedeckt sind. Hier sind beispielsweise zu nennen, dass das EVA-Plattenmaterial über die Schuhsohlenfläche nicht durchgängig sein muss, sondern bspw. Öffnungen in einem Ballenbereich oder im Zehenbereich oder auch im Fersenbereich aufweisen kann. Eine andere Ausführungsform des EVA-Plattenmaterials besteht darin, dieses nicht als Vollmaterial auszuführen, sondern in einer perforierten Ausführungsform, wobei auch hier die Größe der Perforationsöffnungen variabel gestaltet sein kann. Ferner ist ebenfalls vorstellbar, dass verschiedene EVA-Plattenmaterialien, die bspw. schichtartig angeordnet sind, zum Einsatz kommen oder auch in Sohlenlängs- oder Sohlenquerrichtung nebeneinander zum Liegen kommen und durch die flexible Lage bzw. durch das Stützteil miteinander zusammengehalten werden.

Auch die flexible Lage kann verschiedenartigste Ausführungen haben und ist nicht auf die Ausführungsform beschränkt, die oben exemplarisch beschrieben wurde, sondern hier können mehrlagige bzw. mehrschichtige flexible Lagen 4 zum Einsatz kommen, wobei die Schicht, welche mit dem Polsterkörper 10, d.h. mit dem EVA-Plattenmaterial 2 in Kontakt steht, bevorzugt mit einer Klebeschicht versehen ist. Die Oberfläche derjenigen Seite der flexiblen Lage 4, die dem Stützteil 6 zugewandt ist, sollte derart ausgestaltet sein, dass es sich gut mit PU-Schaumkunststoff verbindet.

Weiter analog ist für den einschlägigen Fachmann durchaus vorstellbar, verschiedene PU-Schaumkunststoffe für die Erzeugung des Stützteils 6 zu verwenden, welche bspw. unterschiedliche Härten und/oder Farben aufweisen, damit spezielle Eigenschaften des erfindungsgemäßen orthopädischen Schuheinlegesohlenrohlings erzielt werden können.

In einer weiteren Ausgestaltung der Erfindung können zwischen der flexiblen Lage 4 und dem den Polsterkörper 10 bildenden EVA-Plattenmaterial 2 vor den jeweiligen Verfahrensschritten b1) oder a2), also vor Aufbringen der flexiblen Lage 4 auf das EVA-Plattenmaterial 2 weitere orthopädisch wirksame Bauteile angeordnet und eingefügt werden, die dann automatisch durch das Anheften der flexible Lage 4 und das spätere Schließen der Schäumform durch die entstehenden Prozesswärme des expandierenden PU-Schaumkunststoff über die Klebeschicht an die dem Fuß abgewandten Seite des EVA-Plattenmaterials 2 festgesetzt werden. Auch hier findet der Fachmann vielfältige weitere fachübliche Ausführungsmöglichkeiten, die alle vom erfinderischen Gedanken umfasst sind. Bei den zuvor angesprochenen Bauteilen mit orthopädischer Wirkung handelt es sich beispielsweise um Pelotten, Seitenkeile, Fersenkeile und ähnlichem.

Der in Figur 5 flächenhaft ausgebildete Schuheinlegesohlenrohling kann in einem weiteren Bearbeitungsschritt f) in eine Schuhsohlenform zugeschnitten werden, bzw. ausgestanzt werden, sodass bspw. ein schematisch in Figur 1 dargestellter orthopädischer Schuheinlegesohlenrohling 1 entsteht.

Nach einem solchen "in Form bringen" durch Zuschneiden oder Stanzen, kann der erfindungsgemäß erzeugte orthopädische Schuheinlegesohlenrohling 1 sowohl auf der Oberseite 7 als auch auf der Unterseite 8 mit einer Decke bezogen werden. Dies kann sowohl beim Hersteller des erfindungsgemäßen orthopädischen Schuheinlegesohlenrohling 1 erfolgen, als auch später nach einer eventuellen Bearbeitung, bspw. einer individuellen Anpassung des Schuheinlegesohlenrohlings durch einen Orthopädietechniker oder Orthopädieschuhmacher. Auch dies stellt ein fachübliches Vorgehen dar, was vom Erfindungsgedanken umfasst ist, und an dieser Stelle daher keiner weiteren Erläuterung bedarf.

Insgesamt wird mit dem erfindungsgemäßen Verfahren ein orthopädischer Schuheinlegesohlenrohling zur Verfügung gestellt, welcher einfach in seinem Aufbau ist, jedoch zuverlässig die zur Erzielung einer orthopädischen Wirkung erforderlichen Bauteile sicher positioniert und zusammenhält. Dabei ist der orthopädisch wirksame Schuheinlegesohlenrohling günstig in seiner Herstellung, da es nur eines einzigen Urformprozessschrittes bedarf, bei dem sowohl das eingesetzte EVA-Plattenmaterial in eine drei-dimensionale Fußbettform geformt wird, als auch gleichzeitig ein Stützteil aus PU-Schaumkunststoff drei-dimensional an den Schuheinlegesohlenrohling angeformt wird. Letztendlich entsteht mit dem erfindungsgemäßen Verfahren ein orthopädisch wirksamer Schuheinlegesohlenrohling 1 mit einem Polsterkörper 10 aus EVA-Material, das bevorzugt ein geringes Raumgewicht aufweist, mit einem daran angeschäumten Stützbauteil aus PU-Kunststoff, das in seiner Stützwirkung durch Auswahl einer geeigneten Härte des PU-Schaumkunststoffs einstellbar ist. Somit ist der erfindungsgemäße, orthopädische Schuheinlegesohlenrohling 1 nicht nur günstig in seiner Herstellung, sondern auch gewichtsreduziert gegenüber Schuheinlegesohlenrohlinge, die aus dem Stand der Technik bekannt sind. Darüber hinaus lässt das erfindungsgemäße Verfahren flexibel viele weitere mögliche Ausführungsformen zu, ohne dass dabei vom Grundgedanken der Erfindung - einen EVA-Polsterkörper mit einem PU-Schaumkunststoff-Stützkörper über eine flexible Lage, die zwischen den beiden Bauteilen angeordnet ist, in einem RIM-Urformschritt zu verbinden.

### Bezugszeichenliste

- 1: Orthopädischer Schuheinlegesohlenrohling
- 2: EVA-Plattenmaterial
- 3: Fußbett
- 4: Flexible Lage
- 5: PU-Schaumkunststoff
- 6: Stützteil aus PU-Schaumkunststoff
- 7: Oberseite
- 8: Unterseite
- 9: Einlegeöffnungen
- 10: Polsterkörper
- 11: Vorderfußbereich/ Zehenbereich
- 12: Mittelfußbereich
- 13: Fersenbereich

- a1): Verfahrensschritt 1 Alternative 1
- a2): Verfahrensschritt 2 Alternative 1
- b1): Verfahrensschritt 1 Alternative 2
- b2): Verfahrensschritt 2 Alternative 2
- c): Verfahrensschritt 3 beide Alternativen
- d): Verfahrensschritt 4 beide Alternativen
- e): Verfahrensschritt 5 beide Alternativen

## Patentansprüche

1. Mehrschichtig aufgebauter, orthopädischer Schuheinlegesohlenrohling (1) mit einem oberseitigen Polsterkörper (10) aus geschäumten EVA-Plattenmaterial (2), das derart verformt ist, dass es ein 3-dimesional ausgebildetes Fußbett (3) bildet, wobei auf der fußabgewandten Seite des geschäumten EVA-Plattenmaterials (2) zumindest in einem Teilbereich eine flexible Lage (4) aufgeklebt ist, die zumindest in Teilbereichen für PU-Schaumkunststoff (5) undurchlässig ist, wobei an die flexible Lage (4), auf der dem EVA-Plattenmaterial (2) abgewandten Seite, ein im RIM-Verfahren dreidimensional geformter Stützkörper (6) aus PU-Schaumkunststoff (5) angeschäumt ist.

2. Schuheinlegesohlenrohling (1) nach Anspruch 1, bei dem das EVA-Plattenmaterial (2) perforiert ist.

3. Schuheinlegesohlenrohling (1) nach Anspruch 1 oder 2, bei dem das EVA-Plattenmaterial (2) aus expandierten EVA-Schaumkunststoff-Material besteht.

4. Schuheinlegesohlenrohling (1) nach einem der vorherigen Ansprüche, bei dem das EVA-Plattenmaterial (2) ein Raumgewicht von weniger als 10 kg/m³ aufweist.

5. Schuheinlegesohlenrohling (1) nach einem der vorherigen Ansprüche, bei dem das EVA-Plattenmaterial (2) schleifbar ist.

6. Schuheinlegesohlenrohling (1) nach einem der vorherigen Ansprüche, bei dem die flexible Lage (4) zwei- oder mehrschichtig aufgebaut ist, wobei eine zum EVA-Plattenmaterial (2) weisende erste Schicht so beschaffen ist, dass diese mit dem EVA-Plattenmaterial (2) verklebt werden kann, und eine dem Stützkörper zugewandte zweite Schicht sich mit PU-Schaumkunststoff (5) verbindet.

7. Schuheinlegesohlenrohling (1) nach Anspruch 6, bei dem die zweite Schicht für PU-Schaumkunststoff (5) undurchlässig ist oder bei dem zwischen der ersten Schicht und der zweiten Schicht eine dritte Schicht angeordnet ist, die für PU-Schaumkunststoff (5) undurchlässig ist.

8. Schuheinlegesohlenrohling (1) nach einem der vorherigen Ansprüche, bei dem die flexible Lage (4) vollflächig an dem EVA-Plattenmaterial (2) angebracht ist und nur in den Bereichen für PU-Schaumkunststoff (5) undurchlässig ist, die durch das Stützteil unterstützt werden.

9. Schuheinlegesohlenrohling (1) nach einem der vorherigen Ansprüche, bei dem der PU-Stützkörper das EVA-Plattenmaterial (2) vollflächig oder nur in Teilbereichen unterstützt oder der Stützkörper Ausnehmungen aufweist, um die Dämpfungseigenschaften des Schuheinlegesohlenrohling in Teilbereichen zu erhöhen.

10. Schuheinlegesohlenrohling (1) nach einem der vorherigen Ansprüche, bei dem der PU-Stützkörper (6) und/oder der Polsterkörper (10) zur individuellen Anpassung an den Träger einer Schuheinlage schleifbar und/oder thermoformbar ist.

11. Schuheinlegesohlenrohling (1) nach einem der vorherigen Ansprüche, bei dem der Schuheinlegesohlenrohling (1) auf der Seite des Fußbetts (3) und/oder auf der Seite des Stützteils (6) mit einer oder mehreren Decken bezogen ist.

12. Verfahren zum Herstellen eines Schuheinlegesohlenrohling (1) mit einem oberseitigen drei-dimensional aus geschäumten EVA-Plattenmaterial (2) geformten Fußbett (3) und einem im RIM-Verfahren erzeugten Stützteil (6) an der Unterseite, wobei das Verfahren die Schritte aufweist:
a1) Einlegen eines unverformten geschäumten EVA-Plattenmaterials in eine erste Formhälfte einer RIM-Schäumform, die die Oberseite (7) des Schuheinlegesohlenrohling (1) dreidimensional formt;
b1) Einlegen einer flexiblen Lage (4) auf das geschäumte EVA-Plattenmaterial (2), wobei entweder die flexible Lage (4) oder das EVA-Plattenmaterial (2) mit einem Kleber versehenen ist, sodass die flexible Lage (4) an dem EVA-Plattenmaterial (2) anhaftet und zur Kavität zeigt;
alternativ zu den Schritten a1) und b1):
a2) Aufbringen einer flexiblen Lage (4) mittels eines Klebers auf eine Seite eines geschäumten EVA-Plattenmaterials (2);
b2) Einlegen des EVA-Plattenmaterials (2) mit der daran aufgebrachten flexiblen Lage (4) in eine erste Formhälfte einer RIM-Schäumform, die die Oberseite des Schuheinlegesohlenrohlings dreidimensional formt, derart, dass das EVA-Plattenmaterial (2) zur formgebenden Oberfläche der ersten Schäumformhälfte und die flexible Lage (4) zur Kavität zeigt;
nach alternativen Ausführen der Schritte a1) und b1) oder a2) und b2):
c) Einbringen von PU-Schaumkunststoff erzeugenden Komponenten auf die formgebenden Oberflächen der zweite Formhälfte der RIM-Schäumform, die die Unterseite (8) des Schuheinlegesohlenrohlings (1) dreidimensional formt;
d) Schließen der RIM-Schäumform unter Verformung des EVA-Plattenmaterials zu einem anatomisch ausgebildeten Fußbett und Ausreagieren-lassen der PU-Schaumkunststoff erzeugenden Komponenten;
e) Öffnen der RIM-Schäumform und Entnahme des Schuheinlegesohlenrohlings (1);

13. Verfahren nach Anspruch 12, bei dem der Schuheinlegesohlenrohling (1) nach dem Entnehmen aus der RIM-Schäumform in eine Schuhsohlenform zugeschnitten bzw. gestanzt wird.

14. Verfahren nach einem der Ansprüche 12 oder 13, bei dem vor dem Schritt a1) oder dem Schritt b2) ein mit expandiertem EVA-Material verklebbares Deckenmaterial in die erste Schäumformhälfte eingelegt oder auf die das Fußbett (3) bildende Seite des EVA-Plattenmaterial (2) aufgebracht wird.

15. Verfahren nach einem der Ansprüche 12 bis 14, bei dem vor dem Schritt a1) oder dem Schritt a2) orthopädische wirksame Bauteile zwischen das EVA-Plattenmaterial (2) und der flexible Lage (4) eingelegt werden.

16. Verfahren nach einem der Ansprüche 12 bis 15, bei dem der Schuheinlegesohlenrohling 1 nach dem Entnehmen aus der RIM-Schäumform auf der Seite des Stützteils mit einer oder mehreren Decken bezogen wird.

## Claims

1. Multi-layered orthopaedic shoe insole blank (1) with an upper cushioning body (10) made of foamed EVA sheet material (2), which is deformed in such a way that it forms a 3-dimensionally shaped footbed (3), wherein a flexible layer (4) is glued in at least a partial region onto that side of the foamed EVA sheet material (2) which faces away from the foot, which is impermeable to PU foam plastic (5) at least in partial regions, wherein a support body (6) of PU foam plastic (5), which is moulded three-dimensionally in the RIM process, is foamed onto the flexible layer (4) on the side facing away from the EVA sheet material (2).

2. Shoe insole blank (1) according to claim 1, wherein the EVA sheet material (2) is perforated.

3. Shoe insole blank (1) according to claim 1 or 2, wherein the EVA sheet material (2) consists of expanded EVA foam plastic material.

4. Shoe insole blank (1) according to any one of the preceding claims, wherein the EVA sheet material (2) has a density of less than 10 kg/m3.

5. Shoe insole blank (1) according to any one of the preceding claims, wherein the EVA sheet material (2) is grindable.

6. Shoe insole blank (1) according to one of the previous claims, in which the flexible layer (4) is constructed in two or more layers, a first layer facing the EVA sheet material (2) being such that it can be bonded to the EVA sheet material (2), and a second layer facing the support body being such that it can be bonded to PU foam plastic (5).

7. Shoe insole blank (1) according to claim 6, in which the second layer is impermeable to PU foam plastic (5) or in which a third layer which is impermeable to PU foam plastic (5) is arranged between the first layer and the second layer.

8. Shoe insole blank (1) according to one of the previous claims, wherein the flexible layer (4) is attached to the EVA sheet material (2) over the entire surface and is impermeable to PU foam plastic (5) only in the areas supported by the support body.

9. Shoe insole blank (1) according to one of the previous claims, in which the PU support body supports the EVA sheet material (2) over the entire surface or only in partial areas, or the support body has recesses in order to increase the damping properties of the shoe insole blank in partial areas.

10. Shoe insole blank (1) according to one of the previous claims, in which the PU support body (6) and/or the cushion body (10) can be ground and/or thermoformed for individual adaptation to the wearer of a shoe insole.

11. A shoe insole blank (1) according to any one of the preceding claims, wherein the shoe insole blank (1) is covered with one or more covers on the side of the footbed (3) and/or on the side of the support member (6).

12. Method of manufacturing a shoe insole blank (1) having an upper side footbed (3) made of three-dimensionally deformed foamed EVA sheet material (2) and a support part (6) produced by the RIM process on the underside, said method comprising the steps of:
a1) Inserting an undeformed foamed EVA sheet material into a first mould half of a RIM foaming mould, which forms the upper side (7) of the shoe insole blank (1) three-dimensionally;
b1) Inserting a flexible layer (4) onto the foamed EVA sheet material (2), wherein either the flexible layer (4) or the EVA sheet material (2) is provided with an adhesive so that the flexible layer (4) adheres to the EVA sheet material (2) and faces the cavity;
alternatively to steps a1) and b1):
a2) Applying a flexible layer (4) by means of an adhesive to one side of a foamed EVA sheet material (2);
b2) Inserting the EVA sheet material (2) with the flexible layer (4) applied thereto into a first mould half of a RIM foaming mould, which forms the upper side of the shoe insole blank three-dimensionally, in such a way that the EVA sheet material (2) faces the shape-giving surface of the first foaming mould half and the flexible layer (4) faces the cavity;
after alternatively carrying out steps a1) and b1) or a2) and b2):
c) Introducing PU foam plastic generating components onto the shape-giving surfaces of the second mould half of the RIM foaming mould, which forms the underside (8) of the shoe insole blank (1) three-dimensionally;
d) Closing the RIM foam mould while deforming the EVA sheet material into an anatomically shaped footbed and allowing the PU foam plastic-generating components to react;
e) Opening the RIM mould and removing the shoe insole blank (1);

13. Method according to claim 12, in which the shoe insole blank (1) is cut or punched into a shoe sole shape after removal from the RIM foam mould.

14. The method according to any one of claims 12 or 13, wherein prior to step a1) or step b2) a cover material bondable with expanded EVA material is inserted into the first foam mould half or applied to the footbed (3) forming side of the EVA sheet material (2).

15. The method of any one of claims 12 to 14, wherein orthopaedic effective components are inserted between the EVA sheet material (2) and the flexible layer (4) prior to step a1) or step a2).

16. The method of any one of claims 12 to 15, wherein the shoe insole blank 1 is covered with one or more covers after removal from the RIM foaming mould on the side of the support member.

## Revendications

1. Ébauche de semelle intérieure orthopédique multicouche (1) dotée, sur la face supérieure, d'un corps de rembourrage (10) composé d'un matériau de plaque en EVA expansé (2) qui est façonné de sorte à former une assise plantaire (3) en trois dimensions, une couche flexible (4) étant collée, au moins dans une zone partielle, sur la face opposée au pied du matériau de plaque en EVA expansé (2), ladite couche étant imperméable, au moins dans des zones partielles, à la mousse de plastique PU (5) et un corps de soutien (6) en mousse de plastique PU (5), façonné en trois dimensions selon un procédé RIM, étant collé par moussage à la couche flexible (4), sur le côté opposé au matériau de plaque en EVA (2).

2. Ébauche de semelle intérieure (1) selon la revendication 1, dans laquelle le matériau de plaque en EVA (2) est perforé.

3. Ébauche de semelle intérieure (1) selon la revendication 1 ou 2, dans laquelle le matériau de plaque en EVA (2) est composé d'un matériau en mousse de plastique EVA expansée.

4. Ébauche de semelle intérieure (1) selon l'une quelconque des revendications précédentes, dans laquelle le matériau de plaque en EVA (2) présente une densité inférieure à 10 kg/m³.

5. Ébauche de semelle intérieure (1) selon l'une quelconque des revendications précédentes, dans laquelle le matériau de plaque en EVA (2) est rectifiable.

6. Ébauche de semelle intérieure (1) selon l'une quelconque des revendications précédentes, dans laquelle la couche flexible (4) est formée de deux ou plusieurs couches, une première couche tournée vers le matériau de plaque en EVA (2) étant conçue de sorte à pouvoir être collée au matériau de plaque en EVA (2), et une deuxième couche tournée vers le corps de soutien se formant avec la mousse de plastique PU (5).

7. Ébauche de semelle intérieure (1) selon la revendication 6, dans laquelle la deuxième couche est imperméable à la mousse de plastique PU (5) ou dans laquelle une troisième couche est disposée entre la première couche et la deuxième couche, ladite troisième couche étant imperméable à la mousse de plastique PU (5).

8. Ébauche de semelle intérieure (1) selon l'une quelconque des revendications précédentes, dans laquelle la couche flexible (4) est fixée sur toute la surface du matériau de plaque en EVA (2) et n'est imperméable à la mousse de plastique PU (5) que dans les zones soutenues par l'élément d'appui.

9. Ébauche de semelle intérieure (1) selon l'une quelconque des revendications précédentes, dans laquelle l'élément d'appui en PU supporte le matériau de plaque en EVA (2) sur toute la surface ou uniquement dans des zones partielles ou dans laquelle l'élément d'appui présente des évidements dans le but d'accroître les propriétés d'amortissement de l'ébauche de semelle intérieure de chaussure dans des zones partielles.

10. Ébauche de semelle intérieure (1) selon l'une quelconque des revendications précédentes, dans laquelle l'élément d'appui en PU (6) et/ou le corps de rembourrage (10) peut être rectifié et/ou thermoformé afin de s'adapter individuellement au porteur d'une semelle intérieure.

11. Ébauche de semelle intérieure (1) selon l'une quelconque des revendications précédentes, dans laquelle l'ébauche de semelle intérieure (1) est recouverte d'un ou de plusieurs revêtements du côté de l'assise plantaire (3) et/ou du côté de l'élément d'appui (6).

12. Procédé de fabrication d'une ébauche de semelle intérieure (1) comportant une assise plantaire (3), moulée en trois dimensions à partir d'un matériau de plaque en EVA expansé (2), et un élément d'appui (6) conçu par procédé RIM sur la face inférieure, ledit procédé de fabrication comprenant les étapes suivantes :
a1) Insertion d'un matériau de plaque en EVA expansé non façonné dans une première moitié d'un moule de moussage RIM qui moule en trois dimensions la face supérieure (7) de l'ébauche de semelle intérieure (1) ;
b1) Insertion d'une couche flexible (4) sur le matériau de plaque en EVA expansé (2), la couche flexible (4) ou le matériau de plaque en EVA (2) étant pourvu d'un adhésif, de telle sorte que la couche flexible (4) adhère au matériau de plaque en EVA (2) et est tournée vers la cavité ;
alternativement aux étapes a1) et b1) :
a2) Application d'une couche flexible (4) au moyen d'un adhésif sur une face d'un matériau de plaque en EVA expansé (2) ;
b2) Insertion du matériau de plaque en EVA (2), avec la couche flexible (4) qui y est appliquée, dans une première moitié d'un moule de moussage RIM qui moule en trois dimensions la face supérieure de l'ébauche de semelle intérieure, de telle sorte que le matériau de plaque en EVA (2) est tourné vers la surface de formage de la première moitié du moule de moussage et que la couche flexible (4) est tournée vers la cavité ;
après avoir procédé alternativement aux étapes a1) et b1) ou a2) et b2) :
c) Introduction de composants produisant de la mousse de plastique PU sur les surfaces de moulage de la deuxième moitié du moule de moussage RIM, qui moule en trois dimensions la face inférieure (8) de l'ébauche de semelle intérieure (1) ;
d) Fermeture du moule de moussage RIM avec façonnage du matériau de plaque en EVA dans le but de former une assise plantaire anatomique et en laissant réagir les composants produisant la mousse PU ;
e) Ouverture du moule de moussage RIM et retrait de l'ébauche de semelle intérieure (1).

13. Procédé selon la revendication 12, dans lequel l'ébauche de semelle intérieure (1) est taillée sur mesure ou découpée en forme de semelle intérieure de chaussure après avoir été retirée du moule de moussage RIM.

14. Procédé selon l'une des revendications 12 ou 13, dans lequel, avant l'étape a1) ou l'étape b2), un matériau de revêtement pouvant être collé à un matériau en EVA expansé est inséré dans la première moitié du moule de moussage ou est appliqué sur la face du matériau de plaque en EVA (2) formant l'assise plantaire (3).

15. Procédé selon l'une quelconque des revendications 12 à 14, dans lequel, avant l'étape a1) ou l'étape a2), des composants à action orthopédique sont intercalés entre le matériau de plaque en EVA (2) et la couche flexible (4).

16. Procédé selon l'une quelconque des revendications 12 à 15, dans lequel l'ébauche de semelle intérieure (1) est recouverte d'un ou plusieurs revêtements du côté de l'élément d'appui après avoir été retirée du moule de moussage RIM.
